# EUROPÄISCHE PATENTANMELDUNG

(11) **EP 2 800 252 A2**
(43) Veröffentlichungstag der Anmeldung: **05.11.2014**
(21) Anmeldenummer: 14164121.7
(22) Anmeldetag: 10.04.2014
(51) Int. Cl.: H02K 11/00

(54) **Elektromotor mit einem kapazitiven Rotorpositionssensor**

(30) Priorität: 30.04.2013 DE 102013207981
(71) Anmelder: ROBERT BOSCH GMBH, 70442 Stuttgart (DE)
(72) Erfinder: Kilast, Bernd, 71277 Rutesheim (DE); Kuehn, Timo, 76307 Karlsbad (DE)

(57) **Zusammenfassung**

Die Erfindung betrifft eine elektrische Maschine, insbesondere einen Elektromotor. Der Elektromotor weist einen Stator und einen Rotor auf. Der Elektromotor weist auch einen Rotorpositionssensor auf, wobei der Rotorpositionssensor ausgebildet ist, eine Rotorposition des Rotors entlang eines Rotorumlaufes mittels wenigstens einer Kapazität zu erfassen. Erfindungsgemäß weist der Rotor des Elektromotors der eingangs genannten Art im Bereich des Rotorumfangs wenigstens ein Markierungselement auf, wobei das Markierungselement dielektrisch ausgebildet ist. Der Stator weist wenigstens eine Statorelektrode auf und der Rotor weist eine entlang des Rotorumfangs - bevorzugt vollständig umlaufend - ausgebildete Rotorelektrode auf. Mittels der Rotorelektrode und der Statorelektrode ist ein Kondensator gebildet, wobei eine Kapazitätsänderung des Kondensators durch das Markierungselement erzeugt werden kann.

## Beschreibung

### Stand der Technik

Die Erfindung betrifft eine elektrische Maschine, insbesondere einen Elektromotor. Der Elektromotor weist einen Stator und einen Rotor auf. Der Elektromotor weist auch einen Rotorpositionssensor auf, wobei der Rotorpositionssensor ausgebildet ist, eine Rotorposition des Rotors entlang eines Rotorumlaufes kapazitiv, insbesondere mittels wenigstens einer Kapazität, zu erfassen.

Bevorzugt ist der Rotorpositionssensor ausgebildet, ein die Rotorposition des Rotors repräsentierendes Rotorpositionssignal zu erzeugen. Weiter bevorzugt weist der Elektromotor eine Steuereinheit auf, welche ausgebildet ist, den Stator in Abhängigkeit des Rotorpositionssignals zum Erzeugen eines magnetischen Drehfeldes zum Drehbewegen des Rotors zu bestromen.

Aus der DE 33 175 24 A1 ist ein Elektromotor mit einem kapazitiven Rotorpositionssensor bekannt, wobei eine Elektrode eines die Kapazität bildenden Kondensators mit dem Rotor verbunden ist und eine weitere Elektrode des Kondensators mit dem Stator verbunden ist, sodass die Kondensatorplatten einen Luftspalt zwischen dem Stator und dem Rotor einander einschließen. Mittels der mit dem Rotor verbundenen Elektrode ist entlang eines Rotorumfangs ein spezifisches Muster ausgebildet, sodass mittels des Musters eine Kapazität des Kondensators beim Drehbewegen des Rotors moduliert wird und so eine Rotorposition des Rotors erfasst werden kann.

### Offenbarung der Erfindung

Erfindungsgemäß weist der Rotor des Elektromotors der eingangs genannten Art im Bereich des Rotorumfangs wenigstens ein Markierungselement auf, wobei das Markierungselement dielektrisch ausgebildet ist. Der Stator weist wenigstens eine Statorelektrode auf und der Rotor weist eine entlang des Rotorumfangs - bevorzugt vollständig umlaufend - ausgebildete Rotorelektrode auf.

Bevorzugt ist mittels der Rotorelektrode und der Statorelektrode wenigstens ein Kondensator gebildet, wobei eine Kapazitätsänderung des Kondensators und so eine Modulation des Rotorpositionssignals - bevorzugt nur - durch das Markierungselement erzeugt werden kann. So kann vorteilhaft mittels des Markierungselements ein moduliertes Rotorpositionssignal erzeugt werden. Das Markierungselement, im Folgenden auch Markierung genannt, ist bevorzugt ein Dielektrikum.

Bevorzugt ist das Markierungselement durch einen Feststoffkörper, insbesondere einen dielektrisch ausgebildeten Kunststoff, bevorzugt einen Kunststoffstreifen gebildet. Der Kunststoff ist beispielsweise Polyethylen oder ein PTFE (PTFE = Poly-Tetra-Fluor-Ethylen).

Bevorzugt weist der Rotor wenigstens zwei, weiter bevorzugt eine Vielzahl, entlang des Rotorumfangs - insbesondere äquidistant - zueinander beabstandet angeordnete Markierungselemente auf, welche sich jeweils entlang eines Umfangsabschnitts des Rotorumfangs erstrecken. Dadurch kann eine inkrementelle Rotorpositionserfassung erfolgen.

Mittels des so ausgebildeten Rotorpositionssensors kann die Modulation des Rotorpositionssignals vorteilhaft aufwandsgünstig bereitgestellt werden. Die Rotorelektrode braucht vorteilhaft nicht entlang des Rotorumfangs abschnittsweise oder zum Erzeugen eines Modulationsmusters entlang des Rotorumfangs mittels eines entsprechenden Musters ausgebildet sein. Die Rotorelektrode kann vielmehr durch ein Metall des Rotors selbst gebildet sein. Der Rotor braucht so vorteilhaft keine gesonderte Elektrode aufweisen.

Bevorzugt ist die Rotorelektrode durch ein umlaufend ausgebildetes, elektrisch leitfähiges Metall gebildet. Das elektrische Metall ist bevorzugt das Rotormetall, insbesondere ein Metall des Rotorkerns. Das Rotormetall ist beispielsweise Aluminium.

Bevorzugt weist der Rotor - weiter bevorzugt im Rotormetall - vergrabene Permanentmagnete auf.

In einer bevorzugten Ausführungsform ist die Rotorelektrode durch einen Metallzylinder gebildet, welcher sich von einer Rotormantelfläche radial nach innen bis hin zu vergrabenen Permanentmagneten erstreckt. Die Rotorelektrode kann so vorteilhaft durch ein insbesondere massiv ausgebildetes Rotormetall im Bereich der Rotoroberfläche gebildet sein. Dadurch braucht der Rotor keine gesonderte Rotorelektrode aufweisen.

In einer bevorzugten Ausführungsform ist die Statorelektrode auf einem Statorpol des Stators angeordnet, sodass Feldlinien eines Drehmoment erzeugenden Magnetfeldes sich zwischen Statorpol und dem Rotor erstrecken und durch die Statorelektrode hindurch verlaufen können. Der Statorpol des Stators, im Folgenden auch Statorzahn des Stators genannt, kann so vorteilhaft ein Stützelement für die statorseitige Kondensatorelektrode, insbesondere Kondensatorplatte bilden.

Bevorzugt ist zwischen dem Statorzahn und der Statorelektrode eine elektrisch isolierend ausgebildete Isolierschicht angeordnet.

Bevorzugt ist die Isolierschicht durch einen elektrisch isolierenden Klebstoff gebildet. Die Statorelektrode kann so vorteilhaft ein elektrisches Feld zum Rotor hin, durch den Luftspalt hindurch, ausbilden. Das so ausgebildete elektrische Feld kann beim Durchlaufen der als Dielektrikum ausgebildeten Markierung durch das elektrische Feld moduliert werden.

In einer bevorzugten Ausführungsform ist die Isolierschicht magnetisch permeabel ausgebildet. So kann die Isolierschicht vorteilhaft eine größere Dicke aufweisen, als die Statorelektrode. Weiter bevorzugt weist die Isolierschicht eine derartige Dickenerstreckung radial zur Rotorwelle auf, dass eine Kapazität, gebildet aus der Statorelektrode und der Rotorelektrode gleich oder größer ist, bevorzugt ein Vielfaches beträgt, im Vergleich zu einer Kapazität, gebildet aus der Statorelektrode und einem Stator, insbesondere Statorzahn oder zusätzlich einem Statormetall, das an den Statorzahn angekoppelt ist. Dadurch kann vorteilhaft ein gutes Messsignal von der Kapazität zwischen der Statorelektrode und der Rotorelektrode erzeugt werden.

Die Statorelektrode ist bevorzugt als flach ausgebildete, weiter bevorzugt plattenförmige Elektrode ausgebildet.

Bevorzugt weist die Isolierschicht Ferrit auf. Mittels der so ausgebildeten Isolierschicht kann vorteilhaft das Magnetfeld durch die Isolierschicht hindurch vom Stator zum Rotor verlaufen, wobei das elektrische Feld des Kondensators des Rotorpositionssensors vorteilhaft sich im Luftspalt erstreckt und mittels des Isolators hinreichend vom Stator isoliert ist.

Bevorzugt weist der Stator wenigstens zwei Statorelektroden auf, welche mit dem Rotorpositionssensor verbunden sind. Der Rotorpositionssensor ist ausgebildet, die Rotorposition des Rotors in Abhängigkeit einer mittels der wenigstens einen Markierung entlang des Rotorumlaufes modulierten Kapazität des so gebildeten Kondensators zu ermitteln und ein Rotorpositionssignal zu erzeugen, das die Rotorposition repräsentiert. So braucht vorteilhaft keine elektrische Verbindung von der Verarbeitungseinheit zu dem kapazitiven Rotorpositionssensor, insbesondere der durch den Rotor gebildeten Rotorelektrode, verlaufen.

Mittels der so gebildeten Anordnung sind zwei in Serie miteinander geschaltete Kondensatoren gebildet, wobei die Kondensatorplatten seitens des Rotors miteinander elektrisch - durch das Rotormetall selbst - verbunden sind.

Die Verarbeitungseinheit, beispielsweise ein Mikrocontroller oder FPGA (FPGA = Field-Programmable-Gate-Array) ist bevorzugt ein Bestandteil des Rotorpositionssensors.

Zusätzlich oder unabhängig zu der zuvor beschriebenen Ausführungsform, bei der die Statorelektrode mit einem Statorzahn im Bereich des Luftspalts zwischen dem Stator und dem Rotor verbunden ist, kann die Statorelektrode zwischen zwei Statorzähnen angeordnet sein. Vorteilhaft können entlang des Statorumlaufs wenigstens zwei Statorelektroden angeordnet sein, welche jeweils zwischen zwei Statorzähnen angeordnet sind. So kann vorteilhaft ein Rotorpositionssensor gebildet sein, welcher keine elektrische Verbindungsleitung zum Rotor hin aufweisen braucht.

Bevorzugt weist der Elektromotor wenigstens eine Markierung auf, welche mit dem Rotor verbunden ist und sich entlang des Rotorumlaufs auf einem Längsabschnitt erstreckt, welcher zwei aufeinanderfolgenden Statorelektroden gegenüberliegt. So kann vorteilhaft eine Modulation von einem elektrischen Kondensatorfeld erfolgen, welches durch zwei in Statorumfangsrichtung aufeinanderfolgenden Statorelektroden erzeugt wird.

Der Rotor ist bevorzugt ein permanentmagnetisch ausgebildeter Rotor. Dazu sind die Permanentmagnete jeweils entlang des Rotorumfangs von der Rotorwelle beabstandet angeordnet. Die Permanentmagnete sind bevorzugt stabförmig ausgebildet und erstrecken sich jeweils entlang der Längsachse der Rotorwelle. Die Permanentmagnete sind bevorzugt in dem Rotor vergraben, sodass die Permanentmagnete von einer Rotormantelfläche eines zylinderförmig ausgebildeten Rotors radial nach innen beabstandet angeordnet sind. So ist zwischen dem Permanentmagnet und der Rotormantelfläche Rotormaterial, insbesondere Aluminium, oder ein anderes Metall ausgebildet, wobei das Metall elektrisch leitfähig ist. Die von den vergrabenen Permanentmagneten erzeugten Magnetfeldlinien können so das Metall, welches sich zwischen der Rotormantelfläche und dem Permanentmagnet erstreckt, durchdringen.

Bevorzugt sind an dem Rotor wenigstens zwei Markierungen ausgebildet, welche zueinander verschiedene dielektrische Eigenschaften aufweisen. So kann vorteilhaft eine absolute Rotorposition erfasst werden.

In einer anderen Ausführungsform ist die Markierung, insbesondere das Dielektrikum, umlaufend ausgebildet, wobei Längsabschnitte des Dielektrikums entlang des Rotorumlaufs zueinander verschiedene dielektrische Eigenschaften, beispielsweise zueinander verschiedene Dielektrizitätszahlen aufweisen. Weiter bevorzugt weist das Dielektrikum entlang des Rotorumlaufs eine sich gleichmäßig ändernde Dielektrizitätszahl auf. So kann vorteilhaft eine absolute Rotorpositionserfassung erfolgen. Weiter vorteilhaft kann das Dielektrikum so als eine Art Mantelhülse auf den Rotor, bevorzugt einen Rotor mit vergrabenen Rotormagneten, aufgeschoben werden. Der Rotor kann so aufwandsgünstig bereitgestellt werden.

Die elektrische Maschine, insbesondere der Elektromotor, ist bevorzugt durch eine Synchron- oder Asynchronmaschine mit elektronisch kommutiertem Drehfeld gebildet. Die elektrische Maschine kann als Synchronmaschine einen permanentmagnetisch ausgebildeten Rotor aufweisen.

Die Erfindung betrifft auch ein Elektrofahrzeug oder Hybridfahrzeug mit der elektrischen Maschine der vorbeschriebenen Art. Bevorzugt ist die Elektrische Maschine eine Antriebsmaschine des Elektrofahrzeugs oder Hybridfahrzeugs.

Die Erfindung betrifft auch eine Servolenkung mit einem Elektromotor der vorbeschriebenen Art. Der Elektromotor ist bevorzugt Bestandteil der Servolenkung. Die Servolenkung ist ausgebildet, ein lenkunterstützendes Lenkmoment zu erzeugen.

Die Erfindung wird nun im Folgenden anhand von Figuren und weiteren Ausführungsbeispielen beschrieben.

Figur 1 zeigt ein Ausführungsbeispiel für einen Elektromotor mit einem Rotorpositionssensor, welcher ausgebildet ist, eine Rotorposition kapazitiv zu erfassen und dazu zwischen einem Rotor und einem Stator einen Luftspaltüberbrückenden Kondensator ausbildet, dessen Kapazität zwischen der Rotorelektrode und der Statorelektrode entlang eines Rotorumlaufes - mit dem Rotor verbundene dielektrisch ausgebildete Markierungselemente ausgenommen - konstant ist und so nur mittels des an dem Rotor angeordneten dielektrisch ausgebildeten Markierungselements moduliert werden kann;

Figur 2 zeigt eine Variante für den Stator des Elektromotors in Figur 1, bei dem eine Elektrode des gebildeten Kondensators auf einem Statorzahn angeordnet ist;

Figur 3 zeigt eine Variante des in Figur 1 gezeigten Elektromotors, bei dem eine Elektrode des gebildeten Kondensators entlang eines Rotorumlaufs zwischen zwei Statorzähnen angeordnet ist.

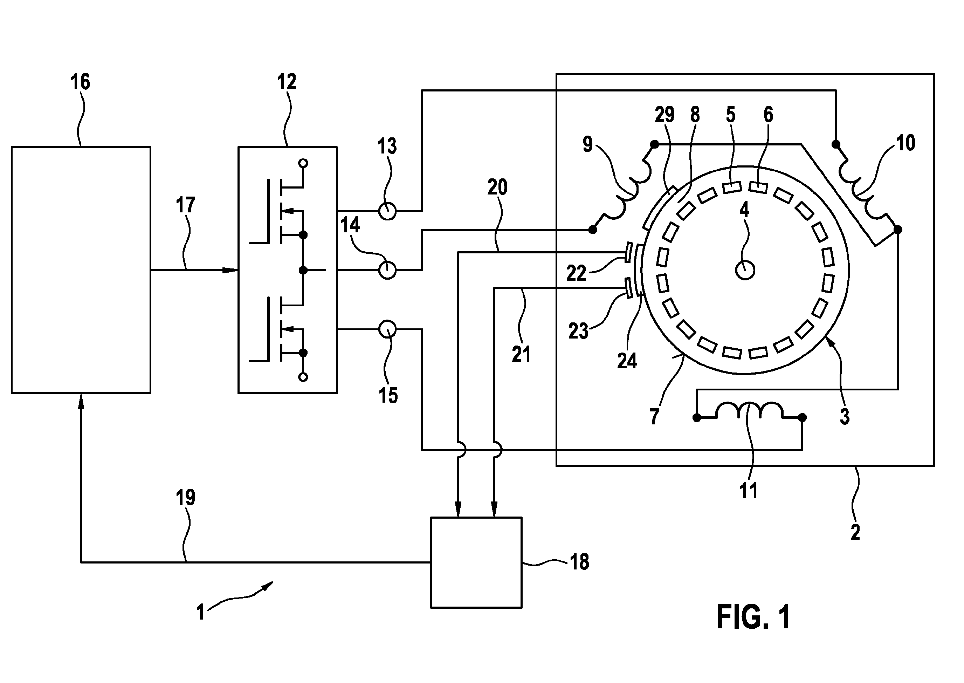

Figur 1 zeigt ein Ausführungsbeispiel für einen Elektromotor 1. Der Elektromotor weist einen Stator 2 und einen permanentmagnetisch ausgebildeten Rotor 3 auf. Der permanentmagnetisch ausgebildete Rotor 3 weist in einem Rotormetall, insbesondere Aluminium, vergraben ausgebildete Permanentmagnete auf, welche von einer Rotorwelle 4 radial beabstandet sind. Zwischen den Permanentmagneten und einer Rotormantelfläche 7 erstreckt sich das Rotormetall 8. Das Rotormetall 8, insbesondere Aluminium, kann so eine Kondensatorplatte für einen Rotorpositionssensor bilden.

Der Stator 2 weist Statorspulen, in diesem Ausführungsbeispiel drei Statorspulen 9, 10 und 11, auf. Der Rotor 2 kann in einer anderen Ausführungsform mehr als drei Statorspulen, beispielsweise fünf Statorspulen oder mehr als fünf Statorspulen aufweisen. Die Statorspulen 9, 10 und 11 sind in diesem Ausführungsbeispiel in Sternschaltung miteinander verschaltet.

Der Elektromotor 1 weist auch eine Leistungsendstufe 12 auf, welche ausgangsseitig mit den Statorspulen des Stators 2 verbunden ist. Die Leistungsendstufe 12 weist einen Ausgang 13 auf, welcher mit der Statorspule 10 verbunden ist und einen Ausgang 14, welcher mit der Statorspule 9 verbunden ist und einen Ausgang 15, welcher mit der Statorspule 11 verbunden ist.

Der Elektromotor 1 weist auch eine Steuereinheit 16 auf, welche ausgangsseitig über eine Verbindungsleitung 17 mit der Leistungsendstufe 12 verbunden ist und welche ausgebildet ist, die Leistungsendstufe, insbesondere Halbleiterschalter der Leistungsendstufe 12 zum Bestromen der Statorspulen 9, 10 und 11 und so zum Erzeugen eines magnetischen Drehfeldes anzusteuern. Die Steuereinheit 16 ist eingangsseitig über eine Verbindungsleitung 19 mit einem Rotorpositionssensor 18 verbunden und ist ausgebildet, die Leistungsendstufe 12 in Abhängigkeit eines von dem Rotorpositionssensor 18 erzeugten Rotorpositionssignals anzusteuern. Die Steuereinheit 16 ist beispielsweise durch einen Mikrocontroller oder durch ein FPGA gebildet.

Der Rotorpositionssensor 18 ist eingangsseitig über eine Verbindungsleitung 20 mit einer Statorelektrode 22 und über eine Verbindungsleitung 21 mit einer Statorelektrode 23 verbunden. Die Statorelektroden 22 und 23 sind entlang eines Rotorumlaufs zueinander beabstandet angeordnet und erstrecken sich jeweils entlang eines Umfangsabschnitts. Der Rotor 3 weist eine Markierung 24 auf, welche als Dielektrikum ausgebildet ist. Die Markierung 24 erstreckt sich entlang eines Umfangsabschnitts des Rotors 3. Die Markierung 24 ist mit dem Rotor 3 verbunden und ist auf der Rotormantelfläche 7 angeordnet. Die Markierung 24 erstreckt sich so in einen Luftspalt zwischen der Rotormantelfläche 7 und dem Stator 2. Die Statorelektrode 22 und das Rotormetall 8, welches umlaufend ausgebildet ist, bilden gemeinsam einen Kondensator, der die zuvor genannte Kapazität bildet. Die Statorelektrode 23 und das Rotormetall 8 bilden einen weiteren Kondensator und somit eine Kapazität. Die Kondensatoren, insbesondere mit der Statorelektrode 22 und der Statorelektrode 23, sind so in Serie geschaltet, insoweit die Metallschicht 8 eine gemeinsame Rotorelektrode für die Statorelektroden 22 und 23 bildet.

Die Kapazität des so gebildeten Kondensators, aus den Statorelektroden 22 und 23 und der Rotorelektrode, gebildet aus dem Rotormetall 8, kann mittels der Markierung 24 beim Umlaufen des Rotors 3 moduliert werden. Der Rotorpositionssensor 18 ist ausgebildet, die Kapazitätsänderung, verursacht durch die als Dielektrikum ausgebildete Markierung 24, zu erfassen und ein Rotorpositionssignal in Abhängigkeit der Kapazitätsänderung zu erzeugen, das die Rotorposition des Rotors 3, insbesondere einen Rotorwinkel des Rotors 3, repräsentiert. Der Rotor 3 weist auch eine zu der Markierung 24 entlang des Rotorumfangs benachbart angeordnete Markierung 29 auf, welche auf der Rotormantelfläche 7 angeordnet und mit dem Rotor 3 verbunden ist. Die Markierungen 24 und 29 weisen zueinander verschiedene dielektrische Eigenschaften, insbesondere verschiedene Dielektrizitätszahlen auf. Dadurch kann vorteilhaft eine absolute Rotorpositionserfassung erfolgen.

Der Rotor 3 kann neben den Markierungen 24 und 29 noch weitere, entlang des Rotorumfangs angeordnete Markierungen aufweisen, mittels denen beispielsweise eine inkrementelle Rotorpositionserfassung erfolgen kann.

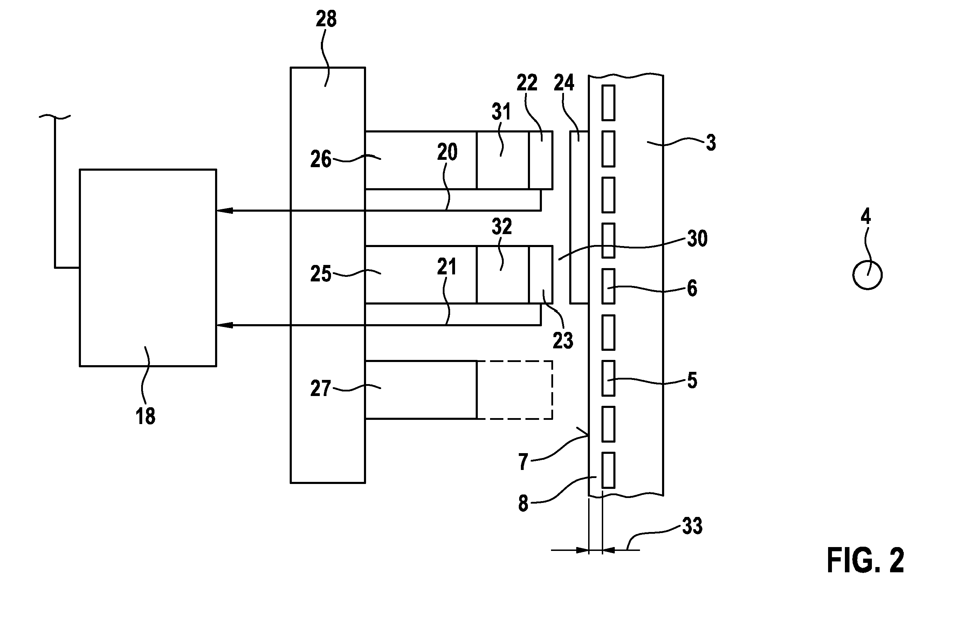

Figur 2 zeigt ein Ausführungsbeispiel für einen Rotorpositionssensor 18, welcher in Figur 1 bereits beschrieben worden ist. Der Rotorpositionssensor 18 in Figur 2 ist eingangsseitig mit zwei Statorelektroden 22 und 23 verbunden.

Die Statorelektrode 22 ist auf einem Statorzahn 25 angeordnet und die Statorelektrode 23 ist auf einem Statorzahn 26 angeordnet. Die Statorelektroden 22 und 23 sind beispielsweise jeweils als Metallplatte, insbesondere Aluminiumplatte, ausgebildet. Zu dem Statorzahn 26 benachbart ist ein Statorzahn 27 ausgebildet. Die Statorzähne 25, 26 und 27 sind jeweils mit einem Statormetall 28 magnetisch leitfähig verbunden. Die Statorzähne 25, 26 und 27 sind jeweils von einer Statorspule oder einem Teil einer Statorspule umwickelt. Die Statorzähne 25, 26 und 27 weisen jeweils eine Stirnseite auf, welche zu einem Luftspalt 30 weist, welcher sich zwischen den Statorzähnen und einem Rotor 3 erstreckt. Der Rotor 3 entspricht dem Rotor 3 in Figur 1 und ist abschittsweise in einer Abwicklung dargestellt. Zwischen der Statorelektrode 22 und der Stirnseite des Statorzahns 26 erstreckt sich ein Isolator 31. Zwischen der Statorelektrode 23 und dem Statorzahn 25 erstreckt sich ein Isolator 32.

Die Isolatoren 31 und 32 sind jeweils aus einem elektrisch isolierenden und magnetisch leitfähigen Material, beispielsweise Ferrit, gebildet.

Der Statorzahn 27 weist in diesem Ausführungsbeispiel dieselbe Längserstreckung bis zum Luftspalt 30 hin auf, wie die Statorzähne 25 und 26. In einer anderen Ausführungsform - gestrichelt dargestellt - weist der Statorzahn 27 dieselbe Längserstreckung bis zum Luftspalt 30 hin auf, wie der Statorzahn 25 und der Statorzahn 26, jeweils zusammen mit dem Isolator und der jeweils mit dem Statorzahn verbundenen Statorelektrode.

Mit dem Rotor 3 ist die Markierung 24 verbunden, welche sich von der Rotormantelfläche 7 von der Rotorwelle 4 abweisend nach außen erstreckt.

Anstelle des Isolators 31 und anstelle des Isolators 32 kann die Statorelektrode 22 und/oder die Statorelektrode 23 mittels eines Klebstoffs auf eine Stirnseite des jeweiligen Statorzahns 25, beziehungsweise 26 aufgeklebt sein.

Die Isolatoren 31 und 32 sind jeweils mit einer sich zwischen der Stirnseite des Statorzahns und der Statorelektrode erstreckenden Dickenerstreckung ausgebildet, sodass eine wirksame Kapazität zwischen der Statorelektrode 22 und dem Rotormetall 8 gleich oder größer ist als eine Kapazität zwischen der Statorelektrode 22 und der Statorelektrode 23 welche über die Statorzähne 25 und 26 und das Rotormetall 28 hinweg gebildet ist.

Mittels des Isolators 31, welcher beispielsweise als Ferrit ausgebildet ist, kann ein von dem Statorzahn 25 stirnseitig austretendes Magnetfeld durch den magnetisch leitfähigen Isolator 31 hindurch und weiter durch die - beispielsweise als Aluminiumplatte ausgebildete - Statorelektrode 22 hindurch zum Luftspalt 30 und zum Rotor 3 gelangen und dort mit einem von den Permanentmagneten des Rotors 3, von denen die Permanentmagnete 5 und 6 beispielhaft bezeichnet sind, erzeugten Magnetfeld zusammenwirken.

Das Rotormetall 8 des Rotors 3, welches sich mit einer Radialerstreckung 33 zwischen den Permanentmagneten 5 und 6 und der Rotormantelfläche 7 entlang des Rotorumfangs umlaufend erstreckt, kann die Rotorelektrode bilden.

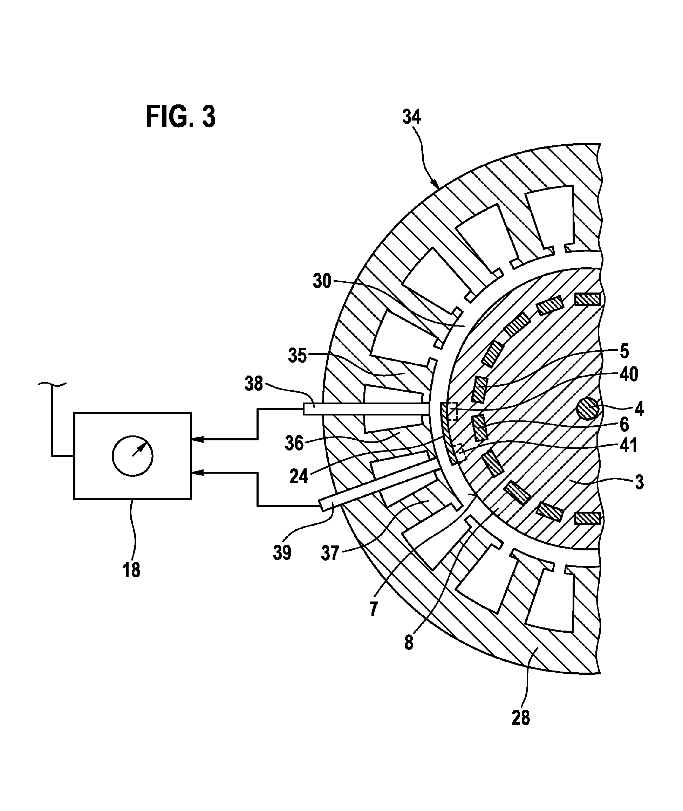

Figur 3 zeigt ein Ausführungsbeispiel für einen Stator 34. Der Stator 34 weist ein Statormetall 28 auf und Statorzähne, welche zueinander benachbart in Rotorumlaufrichtung angeordnet sind. Von den Statorzähnen sind die zueinander benachbarten Statorzähne 35, 36 und 37 bezeichnet. Zwischen den Statorzähnen 35 und 36 ist ein kapazitiver Sensor 38 angeordnet und zwischen den Statorzähnen 36 und 37 ist ein kapazitiver Sensor 39 angeordnet. Die kapazitiven Sensoren 38 und 39 weisen jeweils stirnseitig eine Kondensatorelektrode auf, welche mit ihrer Flachenerstreckung zu einem Luftspalt 30 weist. Der Luftspalt 30 erstreckt sich zwischen einer Stirnseite der Statorzähne und einer Rotormantelfläche 7 des Rotors 3. Mit der Rotormantelfläche 7 des Rotors 3 ist - wie bereits beschrieben - die Markierung 24 verbunden, welche als Dielektrikum ausgebildet ist und sich entlang eines Umfangsabschnitts des Rotors 3 erstreckt. Dargestellt ist auch ein sich entlang eines Rotorumfangsabschnitts erstreckender Bereich 40 des Rotormaterials 8, welcher sich zwischen den Permanentmagneten und der Rotormantelfläche 7 radial erstreckt. Der Bereich 40 liegt in diesem Ausführungsbeispiel der Elektrode des kapazitiven Sensors 38 gegenüber und kann so eine zur Elektrode des kapazitiven Sensors 38 wirksame Rotorelektrode ausbilden. Ein dem Bereich 41 entsprechender Bereich des Rotormaterials 8 liegt dem kapazitiven Sensor 39 gegenüber. Wenn der Rotor 3 sich dreht, so ist mit dem Rotormaterial 8 entlang der Radialerstreckung 33 eine Rotorelektrode gebildet, welche ohne die dielektrisch ausgebildete Markierung 24 entlang des Rotorumlaufs eine konstante Kapazität zu den Statorelektroden 38 und 39 hin ausbildet. Die kapazitiven Sensoren 38 und 39 können somit eine Kapazitätsänderung, bewirkt durch die als Dielektrikum ausgebildete Markierung 24 erfassen, wenn sich die Markierung 24 zwischen den kapazitiven Sensoren 38 und/oder 39 im Luftspalt 30 befindet.

Die kapazitiven Sensoren 38 und 39 sind jeweils ausgangsseitig mit einem Rotorpositionssensor 18 verbunden. Die Funktionsweise des Rotorpositionssensors 18 wurde bereits in Figur 1 beschrieben. Der Rotorpositionssensor 18 kann beispielsweise einen Schwingungsgenerator aufweisen, wobei der Schwingungsgenerator eine Schwingspule und eine Kapazität, gebildet aus den kapazitiven Sensoren aufweist.

Wenn die Markierung 24 während eines Drehbewegens des Rotors 3 in den Luftspalt 30 wandert, so kann die Frequenz des Schwingungsgenerators verstimmt werden. Der Rotorpositionssensor 18 ist ausgebildet, die Frequenzverstimmung des Schwingkreises zu erfassen und das Rotorpositionssignal 18 in Abhängigkeit der Frequenzverstimmung zu erzeugen.

In einer anderen Ausführungsform kann anstelle des kapazitiven Sensors 38 oder des Sensors 39 nur ein kapazitiver Sensor angeordnet sein, welcher an einer zum Luftspalt 30 und somit zur Rotormantelfläche 7 weisenden Seite zwei Elektroden aufweist. Eine Elektrode der zwei Elektroden weist beispielsweise eine Kreisflächenform auf, die zweite Elektrode eine Ringform, welche die Kreisform umschließt.

Der kapazitive Rotorpositionssensor kann so in nur einem Spalt zwischen zwei zueinander benachbarten Statorzähnen angeordnet sein.

## Patentansprüche

1. Elektromotor (1) mit einem Stator (2) und einem Rotor (3),
wobei der Elektromotor (1) einen Rotorpositionssensor (18, 22, 23) aufweist,
welcher ausgebildet ist, eine Rotorposition des Rotors (3) entlang eines Rotorumlaufes mittels wenigstens einer Kapazität zu erfassen,
**dadurch gekennzeichnet, dass**
der Rotor (3) im Bereich des Rotorumfangs wenigstens ein als Dielektrikum ausgebildetes Markierungselement (24, 29) aufweist, wobei der Stator wenigstens eine Statorelektrode (22, 23) aufweist, und der Rotor (3) eine entlang des Rotorumfangs ausgebildete Rotorelektrode (8) aufweist, wobei mittels der Rotorelektrode (8) und der Statorelektrode (22, 23) wenigstens ein Kondensator gebildet ist, wobei eine Kapazitätsänderung des so gebildeten Kondensators durch das Markierungselement (24, 29) erzeugt werden kann.

2. Elektromotor (1) nach Anspruch 1,
**dadurch gekennzeichnet, dass**
die Rotorelektrode (8) durch ein entlang des Rotorumfangs umlaufend ausgebildetes elektrisch leitfähiges Metall gebildet ist.

3. Elektromotor (1) nach Anspruch 1 oder 2,
**dadurch gekennzeichnet, dass**
der Rotor (3) vergrabene Permanentmagnete (5, 6) aufweist, wobei die Rotorelektrode (8) durch einen Metallzylinder gebildet ist, welcher sich von einer Rotormantelfläche (7) radial nach innen bis hin zu vergrabenen Permanentmagneten (5, 6) erstreckt.

4. Elektromotor (1) nach einem der vorhergehenden Ansprüche,
**dadurch gekennzeichnet, dass**
die Statorelektrode (22, 23) auf einem Statorpol (25, 26, 27) des Stators (2) angeordnet ist, so dass Feldlinien eines Drehmoment erzeugenden Magnetfeldes sich zwischen dem Statorpol (25, 26, 27) und dem Rotor (3) erstrecken und durch die Statorelektrode (22, 23) hindurch verlaufen können.

5. Elektromotor (1) nach einem der vorhergehenden Ansprüche,
**dadurch gekennzeichnet, dass**
zwischen dem Statorpol (25, 26, 27) und der Statorelektrode (22, 23) eine elektrisch isolierend ausgebildete Isolierschicht (31, 32) angeordnet ist.

6. Elektromotor (1) nach Anspruch 5,
**dadurch gekennzeichnet, dass**
die Isolierschicht (31, 32), insbesondere Ferrit, magnetisch permeabel ausgebildet ist.

7. Elektromotor (1) nach einem der vorhergehenden Ansprüche,
**dadurch gekennzeichnet, dass**
wenigstens zwei Markierungselemente (24, 29) an dem Rotor (3) ausgebildet sind, welche zueinander verschiedene dielektrische Eigenschaften aufweisen.

8. Elektromotor (1) nach einem der vorhergehenden Ansprüche,
**dadurch gekennzeichnet, dass**
der Stator (2) wenigstens zwei Statorelektroden (22, 23) aufweist, wobei der Rotorpositionssensor (18) nur mit den Statorelektroden (22, 23) verbunden ist und der Rotorpositionssensor (18) ausgebildet ist, die Rotorposition des Rotors (3) in Abhängigkeit einer mittels des wenigstens einen Markierungselements (24, 29) entlang des Rotorumlaufes modulierten Kapazität des so gebildeten Kondensators zu ermitteln und ein Rotorpositionssignal zu erzeugen, das die Rotorposition repräsentiert.

9. Elektromotor (1) nach einem der vorhergehenden Ansprüche,
**dadurch gekennzeichnet, dass**
wenigstens eine Statorelektrode (22, 23) entlang eines Rotorumlaufs zwischen zwei Statorpolen (25, 26, 27) angeordnet ist.

10. Elektromotor (1) nach einem der vorhergehenden Ansprüche,
**dadurch gekennzeichnet, dass**
wenigstens ein Markierungselement (24, 29) sich entlang des Rotorumlaufs auf einem Längsabschnitt erstreckt, der zwei entlang des Statorumfangs aufeinanderfolgenden Statorelektroden (22, 23) gegenüberliegt.
